# EUROPEAN PATENT APPLICATION

(11) **EP 1 136 591 A1**
(43) Date of publication of application: **26.09.2001**
(21) Application number: 99947881.1
(22) Date of filing: 14.10.1999
(51) Int. Cl.: C23C 22/40

(54) **HYDROPHILIZING AGENT FOR METALLIC MATERIAL, HYDROPHILIZING FLUID, METHOD OF HYDROPHILIZING, METALLIC MATERIAL, AND HEAT EXCHANGER**

(30) Priority: 15.10.1998 JP 29365698; 08.10.1999 JP 28820499
(71) Applicant: NIHON PARKERIZING CO., LTD., Chuo-ku, Tokyo 103-0027 (JP)
(72) Inventor: NAKADA, Kazuya, Nihon Parkerizing Co., Ltd., Tokyo 103-0027 (JP)
(74) Representative: Sanderson, Laurence Andrew
(86) International application number: JP9905652
(87) International publication number: WO0022188

(57) **Abstract**

A hydrophilizing composition which contains no chromium and imparts excellent corrosion resistance and long-lasting hydrophilicity to a heat exchanger made of aluminum. The hydrophilizing agent for metallic materials comprises: (A) a hydrophilic polymer having at least one nonionic functional group selected from the group consisting of primary amide, secondary amide, tertiary amide, hydroxy, and polyoxyalkylene groups; (B) a hydrophilic polymer having at least one ionic functional group selected from the group consisting of sulfo, phosphonate, carboxyl, primary amino, secondary amino, tertiary amino, and quaternary ammonium groups; (C) a vanadium compound; and (D) a compound having at least one element selected from the group consisting of Zr, Ti, and Si.

## Description

### [Scope of Claim for Patent]

### [Claim 1]

A hydrophilization agent of metallic material, characterized in that it contains:
(A) a hydrophilic polymer having at least one non-ionic functional group selected from the group consisting of a primary amide group, a secondary amide group, a tertiary amide group, a hydroxyl group and a polyoxyalkylene group;
(B) a hydrophilic polymer having at least one ionic functional group selected from the group consisting of a sulfonic acid group, a phosphonic acid group, a carboxyl group, a primary amino group, a secondary amino group, a tertiary amino group and a quaternary ammonium group;
(C) a vanadium compound;
(D)a compound having at least one element selected from the group consisting of Zr, Ti, Si.

### [Claim 2]

A hydrophilization agent according to claim 1,wherein said component (A) is at least one selected from the polyvinyl alcohol polymer expressed by the following general formula (I) and a reaction product of the polyvinyl alcohol polymer expressed by the following general formula (I) and a diketene, 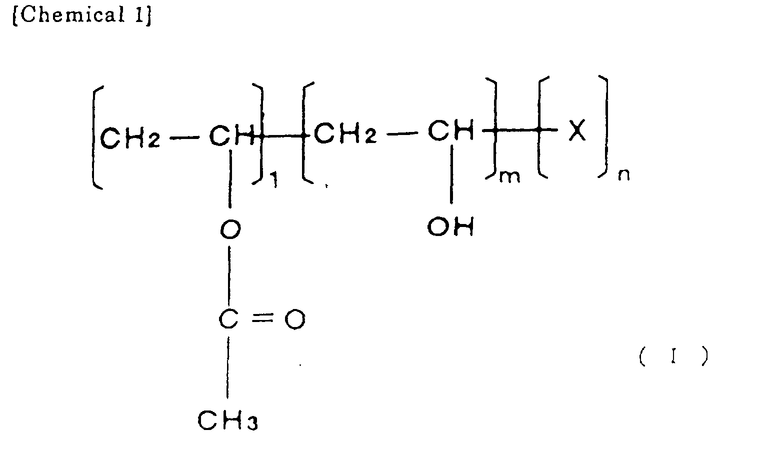 in the above formula (I), X indicates a copolymerizing unit other than vinyl acetate and vinyl alcohol, and 1, m and n indicate the copolymerzing number of the moles of a vinyl acetate copolymerizing unit, a vinyl-alcohol polymerizing unit, and the copolymerizing unit X, respectively, and 1 and n may be zero.

### [Claim 3]

A hydrophilization agent according to claim 1, wherein said component (A) is at least one acrylamide polymer selected from a water-soluble polymer and a water-soluble copolymer of an acrylamide compound expressed by the following general formula (II), 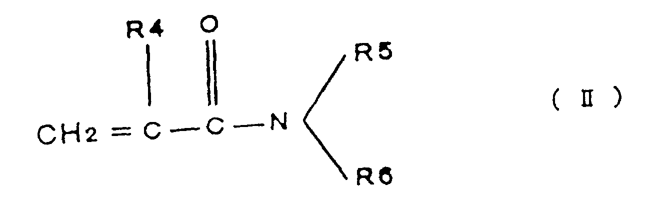 R4 indicates a hydrogen atom or a CH3 group, and R5 and R6 indicate, each independently of the other, a hydrogen atom, an alkyl group of C1- C4, a benzil group, or a hydroxyalkyl group of C1 - C3 -.

### [Claim 4]

A hydrophilization agent according to any one of claims 1 through 3, further containing at least one additive selected from the group consisting of (E) an anti-bacteria/mildew agent, an organic crosslinking agent and a surfactant.

### [Claim 5]

A hydrophilization agent according to any one of claims 1 through 4, wherein relative to 100 parts by weight of said hydrophilic polymer having a non-ionic functional group (A), from 0.1 to 1000 parts by weight of said hydrophilic polymer having an ionic functional group (B), from 0.1 to 200 parts by weight of said vanadium compound (C) in terms of vanadium ions, and from 0.1 to 200 parts by weight of a compound having at least one element selected from the group consisting of Zr, Ti, Si (D) in terms of the elements are blended in the weight proportions.

### [Claim 6]

A hydrophilization liquid of metallic material, characterized in that it contains from 0 05 to 50g/L of the hydrophilic copolymer having a non-ionic functional group (A) as a nonvolatile matter, from 0.05 to 50g/L of the hydrophilic polymer having an ionic functional group (B) as a nonvolatile matter, from 0.05 to 10 g/L of the vanadium compound (C) in terms of vanadium ions, and from 0.05 to 10 g/L of the compound having at least one element selected from the group consisting of Zr, Ti, Si (D) in terms of the elements, each set forth in claim 1.

### [Claim 7]

A hydrophilization method of metallic material, characterized in that the hydrophilization agent or hydrophilization liquid of metallic material set forth in any one of claims 1 through 6 is deposited on the surface of the metallic material and is dried to form a hydrophilic film.

### [Claim 8]

A metallic material, characterized in that a hydrophilic film is formed on the surface thereof by means of depositing the hydrophilization agent or hydrophilization liquid of metallic material set forth in any one of claims 1 through 6 on the surface of the metallic material and drying the same.

### [Claim 9]

A heat exchanger, characterized in that a hydrophilic film is formed on the surface of a metallic material by means of depositing the hydrophilization agent or hydrophilization liquid of metallic material set forth in any one of claims I through 6 on the surface of the metallic material and drying the same.

### [Detailed Explanation of Invention]

### [Technical Field to which the Invention belongs]

The present invention relates to a hydrophilization agent, a hydrophilization liquid and a hydrophilization method of metallic material, a metallic material and a heat exchanger. More particularly, the present invention relates to a hydrophilization agent, a hydrophilization liquid free of chromium, which can impart improved hydrophilic property and corrosion resistance to the metallic material, for example the aluminum-based metallic material used for the fins of a heat exchanger. The present invention relates to such metallic material and heat exchanger.

Heretofore, heat exchangers are manufactured by bonding, e, g., brazing, the metallic material, e.g., an aluminum-based metallic material. Most of such heat exchangers are so designed that their heat dissipating and cooling portions have surface area as large as possible to enhance the heat dissipating and cooling performance. In addition, the inter-fin space is extremely narrow to minimize size of the heat exchanger. Therefore, when an evaporator is operated, moisture in the atmosphere condenses in the fin gaps. The condensed water tends to form water drops which make clogging of the fin gaps more liable to occur, as the hydrophobic property of the fin surface is higher. As a result, the ventilation resistance of the fin gaps is increased, which reduces the heat-exchanging efficiency. A further problem is incurred such that the water drops are scattered downstream the of air flow.

Several methods are therefore proposed and implemented for imparting hydrophilic property on the surface of the metallic material and hence improving its water wettability. These methods aim to prevent the water drops from being retained in the fin gaps and hence to prevent the occurrence of clogging.

The methods for imparting hydrophilic property to the metallic material are classified into two. One is adding or incorporating an organic polymer to an inorganic compound, particularly alkali silicate. The other method relies solely on the organic compound. The former method, which relies on adding or incorporating an organic polymer to alkali silicate, provides improved hydrophilic property and durability of the hydrophilic property, but involves a problem of foreign odor, which is presumed to arise from the inorganic compound, and a problem of lubrication. The latter method, which relies on solely on the organic polymer, exhibits improved hydrophilic property and no problems regarding foreign odor, and lubrication, but the corrosion resistance of a film consisting solely of an organic compound is poor. A dual coating method is, therefore, employed usually such that chemical conversion treatment employed as a pretreatment imparts the corrosion resistance. However, the dual coating method is disadvantageously expensive and moreover of low productivity. In addition, since the chromic-acid chromate and phosphoric-acid chromate, which are usually used in the chemical conversion treatment, contains hexavalent chromium harmful to the human body, there is a possibility that the environment, waste-liquid treatment and the like are detrimentally influenced.

Various methods have been proposed to solve these problems. For example "A Treatment Method by an Aqueous Hydrophilization Treating agent Having Corrosion Resistance" is disclosed in Japanese Unexamined Patent Publication No. 63-171684. This method resides in that a film on the aluminum or its alloy formed by means of resin synthesized from particular monomers impart corrosion resistance and hydrophilic property to the aluminum and the like. However, the hydrophilic property provided by this method is not yet satisfactory. Generally speaking, the film is used in many cases as the underlying layer of the hydrophilic film.

In addition, Japanese Unexamined Patent Publication No. 6-116527 entitled "Surface Treatment Method for Imparting Hydrophilic Property to the Surface of Aluminum Material" discloses to form a film, which imparts the corrosion resistance and hydrophilic property, by an acrylilc-acid monomer, alkali silicate and a cross-linking agent consisting of a vanadium compound. However, the foreign odor and lubrication of this method is unsatisfactory, because they are detrimentally influenced by the inorganic component contained.

In addition, Japanese Unexamined Patent Publication No.1-270,977 entitled "A Hydrophilization Method of Aluminum or its Alloy Having Improved Both Hydrophilic Property and Corrosion Resistance" discloses to form a film, which can impart corrosion resistance and hydrophilic property, by a particular polymer P1, a polymer P2 having a particular functional group and a cross-linking agent. However, since hexavalent chromium is contained in the hydrophilic film, the method is not environ mentally-friendly.

As is described above, there is not yet developed, in the heat exchanger made of metallic material, that is, aluminum, the composition of a hydrophilization agent, free of chromium, which can impart improved corrosion resistance and also can maintain the hydrophilic property for an extended period of time.

### [Problems to be Solved by the Invention]

The present invention intends to solve the problems involved in the prior art described hereinabove. More specifically, it is an object of the present invention to solve such problems as reduction in the heat-exchanging efficiency due to the condensed water, scattering water drops, and generation of foreign odor, and problems in the production process, and the like, and to provide a hydrophilization agent, a hydrophilization liquid free of chromium, which can impart improved hydrophilic property and corrosion resistance, and such hydrophilization method, a metallic material and a heat exchanger,

### [Means for Solving the Problems]

The present inventors gave extensive considerations to a solution of the above- described problems and discovered that these problems can be solved by means of applying on the surface of metallic material a hydrophilization agent which contains a hydrophilic polymer having a particular non-ionic functional group, a hydrophilic polymer having a particular ionic functional group, a vanadium compound, and a compound having at least one element selected from Zr, Ti, Si. Thus, the present invention was completed.

Namely, the hydrophilization agent of metallic material according to the present first invention characterized in that it contains:
(A) a hydrophilic polymer having at least one non-ionic functional group selected from the group consisting of a primary amide group, a secondary amide group, a tertiary amide group, a hydroxyl group and a polyoxyalkylene group;
(B) a hydrophilic polymer having at least one ionic functional group selected from the group consisting of a sulfonic acid group, a phosphonic acid group, a carboxyl group, a primary amino group, a secondary amino group, a tertiary amino group and a quaternary ammonium group;
(C) a vanadium compound; and,
(D) a compound having at least one element selected from the group consisting of Zr, Ti, Si.

Preferably, the hydrophilic, polymer having said a non-ionic functional group (A) in said hydrophilization agent is at least one selected from the polyvinyl alcohol polymer expressed by the following general formula (I) and a reaction product of the polyvinyl alcohol polymer expressed by the following general formula (I) and a diketene.

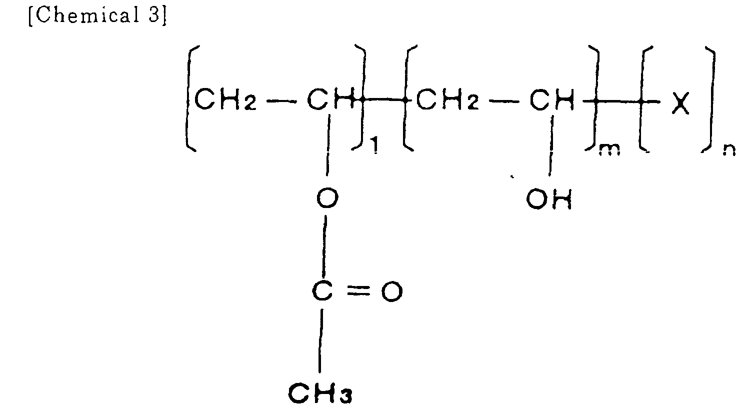

In the above formula (I), X indicates a copolymerizing unit other than vinyl acetate and vinyl alcohol, and 1, m and n indicate the copolymerizing number of the moles of a vinyl acetate copolymerizing unit, a vinyl alcohol polymerizing unit, and the copolymerizing unit X, respectively, 1+m+n = 100, and 1 and n may be zero.

Preferably, the hydrophilic polymer having a non-ionic functional group (A) is at least one acrylamide polymer selected from a water-soluble polymer and a water-soluble copolymer of an acrylamide compound expressed by the following general formula (II).

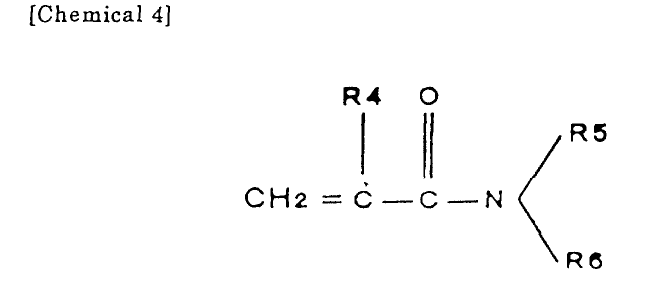

R4 indicates a hydrogen atom or CH3 group, and R5 and R6 indicate, each independently of the other, a hydrogen atom, an alkyl group of C1 - C4, a benzil group, or a hydroxyalkyl group of C1 - C3.

At least one additive selected from the group consisting of (E) an antibacteria/mildew agent, an organic crosslinking agent and a surfactant is preferably contained in addition to the above-mentioned compositions (A) - (D).

Preferably, in the treatment agent according to the present invention, relative to 100 parts by weight of the hydrophilic polymer having a non-ionic functional group (A), from 0.1 to 1000 parts by weight of the hydrophilic polymer having an ionic functional group (B), from 0.1 to 200 parts by weight of the vanadium compound (C) in terms of vanadium ions, and from 0.1 to 200 parts by weight of the compound (D) having at least one element selected from the group consisting of Zr, Ti, Si (D) in terms of the elements are blended in the weight proportions.

A hydrophilization liquid according to the present second invention is related to the above-described treatment agent which is applied to form a hydrophilic film on the surface of metallic material and is characterized in that it contains from 0,05 to 50g/L of the hydrophilic copolymer having a non-ionic functional group (A) as a nonvolatile matter, from 0.05 to 50g/L of the hydrophilic polymer having an ionic functional group (B) as a solid matter, from 0.05 to 10 g/L of the vanadium compound (C) in terms of vanadium ions, and from 0.05 to 10 g/L of a compound having at least one element selected from the group consisting of Zr, Ti, Si (D) in terms of the elements.

A hydrophilization method of metallic material according to the present third invention is characterized in that the hydrophilization agent of metallic material set forth in any one of claims 1 through 5 is deposited on the surface of the metallic material and is dried to form a hydrophilic film having improved corrosion resistance. The present fourth invention relates to a metallic material, on which surface a hydrophilic .film is formed by means of depositing the hydrophilization agent on the surface of the metallic material and drying the same. The present fifth invention relates to a heat exchanger with a hydrophilic film formed as well.

The contents of the present invention are described in detail hereinunder in detail. First, the hydrophilization agent of the first invention is described.

### [Embodiments of Invention]

Preferably, the hydrophilic polymer having the non-ionic functional group and used in the present invention as the first component contains at least one of: (A-1) which is the polyvinyl alcohol polymer expressed by the above-mentioned general formula (I), and a reaction product of the polyvinyl alcohol polymer and diketene; (A-2) which is a co-condensed polymer of at least one acrylamide polymer selected from a water-soluble polymer and a water-soluble copolymer of an acrylamide compound expressed by the following above-mentioned general formula (II), and polyethylene oxide, polyethylene glycoldiamine, adipic acid and ε-caprolactum.

A partially saponified product and completely saponified product of polyvinyl acetate in the first component (A-1), as well as a partially saponified product and completely saponified product of a copolymer of vinyl acetate and another monomer are included in the first component (A-1). A comonomer, which is copolymerized with the vinyl acetate, is not particularly limited but the following can be listed: acrylic acid, methacrylic acid, itaconic acid, maleic acid, or their salts as the anionic comonomer; styrene, acrylonitrile, vinyl ether, (meth)acrylamide, N-methylol (meth)acrylamide, methyl (meth)acrylate, hydroxyethyl (meth)acrylate, vinyl pyrrolidone, acrloyl morpholine, and vinyl acetate as the non-ionic monomer; and aminoethyl (meth)acrylate, vinylimidazole, and N, N-dimethyl diallylamine as the cationic comonomer.

In the above formula (I), X indicates a polymerizing unit other than vinyl acetate and vinyl alcohol; 1, m and n indicate the co-polymerizing number of the moles of a vinyl-acetate polymerizing unit, a vinyl-alcohol unit, and the co-polymerizing unit, respectively. The copolymerizing mole ratio (n/(1+m+n)) of the copolymerizing unit (X) is preferably from 0 to 0.4 and is more preferably from 0 to 0.3. In addition, the copolymerizing mole ratio (1/(1+m+n)) of the vinyl acetate polymerizing unit is preferably from 0 to 0.2 and is more preferably from 0 to 0.1 in the polyvinyl alcohol polymer of the general formula (I). When these co polymerizing ratios are excessively large, the water solubility of the resultant polyvinyl alcohol compound may be lowered to an unsatisfactory level. The range of the mole ratio (m/(1+m+n)) of the vinyl alcohol polymerizing unit is determined by the above-mentioned two mole ratios.

Next, the first component (A-2) is at least one acrylamide polymer selected from a water-soluble polymer and a water-soluble copolymer of an acrylamide compound expressed by the general formula (II) mentioned above. Here, in the above-mentioned general formula (II), R4 indicates a hydrogen atom or a CH3 group, and R5 and R6 indicate, each independently of the other, a hydrogen atom, an alkyl group of C1 - C4, a benzil group, or a hydroxyalkyl group of C1 - C3. One polymerized product of acrylamide compound (monomer (a-a)) and a co-poylmerized product of two or more of acrylamide compounds (monomer (a-a)), as well as a copolymer of one or more of an acrylamide compound (monomer (a-a)) according to the general formula (II) and one or more other comonomer (a-b) are included in the general formula (II). The comonomer (a-b) used here is selected from anionic, non-ionic and cationic addition-polymerizing monomers which are polymerizable with the acrylamide momoners (a-a). Such comonomer (a-b) can be selected, for example, from anionic unsaturated monomers such as (meth)acrylic acid, itaconic acid, maleic acid, vinyl sulfonic acid, styrene sulfonic acid, sulfoethyl acrylate, sulfoethyl methacrylate, N-methylene sulfonate acrylamide, 2-acrylamide-2-methylpropane-sulfonate, acid-phosphooxyethyl methacrylate, or their salt, non-ionic unsaturated monomers such as (meth)acryl amide, N-methylol (meth)acrylamide, hydrdoxyethyl (meth)acrylate, vinyl pyrrolidone, acrloyl morpholine, polyoxyethylene glycolacrylate, and polyoxyethylene glycolacrylate alkylphenylether, and cationic unsaturated monomers such as aminoethyl (meth)acrylate, N, N-dimethyl-aminoethyl acrylate, N-hydroxymethyl-aminoethyl(meth)acrylate, vinyl imidazole, vinyl pyridine, N, N diallyl amine, and N, N-diallyl-N, N-dimethyl ammonium chloride. In addition, the comonomer (a-b) may be selected from such addition-polymerizable monomers not having high hydrophilic property as styrene, acrylonitrile, vinylether, acrylester group and vinylacetate. In this case, the copolymerizing ratio of the comonomer used is selected to maintain the water solubility of the resultant copolymer to the desired level.

One polymer and two or more copolymers of the above-mentioned acylamide monomer (a-a) mentioned above, as well as a copolymer of one of more of the acrylamide monomer (a·a) and the comonomer (a-b) may be subjected to a post-treatment or post-reaction to change their structure. The so-treated copolymer may be used as the hydrophilic polymer having a non-ionic functional group (A), for example as follows: a reaction product, which is obtained by bringing an amine group and formalin into reaction with the amide group, and which is converted to an aminoalkyl group (Mannich reaction); the amide group, which is converted to an amino group by a decarboxylation reaction, causing alkyl and bromine to react with the amide group (Hofmann reaction); the side-chain ester group, which is converted to an amino group by an ester-amide interchange reaction, causing the alkyldiamine to react with the side-chain ester group; and a quaterized amino group.

The hydrophilic polymer having an ionic functional group (B) and constituting the second component used in the inventive hydrophilization agent has at least one ionic functional group selected from the group consisting of a sulfonic acid group, a phosphonic acid group, a carboxyl group, a primary amino group, a secondary amino group, a tertiary amino group and a quaternary ammonium group.

The hydrophilic polymer having an ionic functional group (B) of the second group is largely classified into (B-1), a polymer not having a cationic group but having at least one ionic functional group selected from the anionic group which consists of a sulfonic acid group, a phosphonic acid group and a carboxyl group, and (B-2), a polymer not having an anionic group and having at least one member selected from the group of a primary amino group, a secondary amino group, a tertiary amino group and a quaternary ammonium group. In the second component used in the present invention, it is desirable that the above-mentioned anionic hydrophilic polymer (B-1) and the above-mentioned cationic hydrophilic polymer (B-2) are not used in combination.

The anionic monomer (b-1), which forms the anionic hydrophilic polymer not having a cationic group (B- 1), can be selected from vinyl sulfonate, styrene sulfonate, sulfoethyl acrylate, sulfoethyl methacrylate, N-methylene sulfonic acrylamide, 2-acrylamide-2-methyl propane sulfonate, vinylphenol sulfonate, acid phosphooxy ethylmethacrylate and their salts.

The cationic monomer (b-2), which forms the cationic hydrophilic polymer (B-2) can be selected from aminoethyl (meth)acrylate, N, N-dimethylaminoethyl acrylate, N-hydroxypropyl a minoethyl(meth)acrylate, N-hydroxymethyl aminoethyl methacrylate, vinylimidazole, vinylpyridine, N, N diallylamine, and N, N-diallyl-N, N-dimethylammonium chloride. Each of these monomers (b-1) and (b-2) may form a hydrophilic homopolymer and may be copolymerized with a polymerizable comonomer to form a hydrophilic polymer. The above-mentioned comonomer includes the above-mentioned monomer (b-1) and (b-2) as well as other monomers (b-3), for example, acrylamide, N-methylol (meth)acrylamide, hydroxyethyl (meth)acrylate, vinylpyrrolidone, acrloyl morpholine, polyethylene glycol acrylate alkylphenyether, acrylic acid, methacrylic acid, itaconic acid, maleic acid, their salts, styrene, acrylonitrile, vinyl ether, acryl ester group, vinyl acetate and the like. The comonomer may be a low-hydrophilic monomer such as styrene, acrylonitrile, vinyl ether and (meth)acryl esters. When such low hydrophilic monomer is used, its co-polymerizing ratio is set so as not to impair the desired water solubility of the resultant copolymer.

The vanadium compound (C), which is the third component used in the hydrophilization agent of the present invention, is an inorganic or organic compound which contains vanadium having a possible valence. Metavanadic acid, vanadic acid and its salt (sodium, potassium, ammonium), vanadium oxide such as vanadium pentaoxide, halides such as vanadium pentachloride and vanadium pentafluoride, organic vanadium compounds such as vanadic acetylacetate and vanadyl acetyl acetate, vanadyl sulfate, vanadium sulfate, vanadium nitrate, vanadium phosphate, vanadium acetate, and vanadium biphosphate can be listed.

A reducing agent may be used in combination with the above-mentioned vanadium compound to partially or completely reduce the vanadium compound, as a means for incorporating it into the hydrophilization agent according to the present invention. The reduced, vanadium compound is thus included in the hydrophilization agent.

The fourth component contained in the hydrophilization agent of the present invention is a compound having at least one element selected from the group consisting of Zr, Ti, Si. This is a water-soluble or water-dispersing compound. Preferably, for example, zirconium compounds such as zirconium-ammonium carbonate, zirconyl nitrate, zirconyl sulfate, zirconyl nitrate and their salts, a titanium compound such as diisopropoxy titanium- bis acetylacetone, fluoro titanic acid and their salts, silicofluoric acid and its salt, and alkali silicate are used as the compound.

An anti-bacteria agent and/or anti-mildew agent as the fifth component may be added into the hydrophilization agent according to the present invention so as to suppress the putrefaction odor due to propagation of mildew, bacteria and yeast, provided that the effects of the present invention are not impeded by the fifth component. Desirably, the anti-bacteria/mildew agent usable in the present invention is such that can resist, during the drying step after applying the inventive treatment agent, the heating for removing the water, which is a solvent of the treatment agent. That is, the anti-bacteria/mildew agent desirably does not have a decomposition temperature at 100 °C or less.

An anti-bacteria and/or mildew agent, which is added in the hydrophillization agent according to the present invention, can be selected, for example, from 5-chloro-2methyl-4-isothiazoline-3-on, 2-methyl-4-isothiazoline-3-on, 2-(4-thiocyano-mehylthio)benzothizole, 2, 2-dibromo-3-nitrilopropyon amide, sodiumethylene bis(dithiocarbamate), sodium-2-pyridinethiol- 1-oxide, zinc-2- pyridinethiol-1-oxide, 2, 2'- dithiobis (pyridine-1-oxide), 2, 4, 5, 6-tetrachloro isophthalonitrile, 2-methylcarbonyl aminobenzimidazole, 2, 3, 5, 6-tetrachloro-4-(methylsulfonyl)-pyridine, 2-(4-thyzolyl) benzimidazole, N-(fluoro dichloromethyl thio) sulfamide, p-chloro-m-xylenol, dehydroacetic acid, o-phenyl phenol, 1, 2-benzisothiazoline barium, diiodemethyl-p-toulenesulfone, 2-n-octyl-4-isothyazoline-3-on, 10, 10' oxybisphenoxyarsine and the like.

The addition amount of the anti-bacteria and mildew agent is preferably from 0.1 to 70% by weight, more preferably from 0.3 to 50% by weight; furthermore, preferably from 0.5 to 30% by weight based on the total of the first component (A) and the second component (B).

In the present invention, a three-dimensional structure can be formed by utilizing a functional group of the A component, thereby enhancing the water resistance of the film. A water-soluble cross-linking agent can be used for such purpose. The cross-linking agent, which is included in the hydrophilization agent according to the present invention, can be selected from water-soluble blocked polyisocyanate, polymethylol, polyglycidyne, polyaziridile compound, and an aldehyde group. That is, an organic cross-linking agent can be selected from block polyisocyante bisulfite, methylol melamine, methylol urea, methylolized polyacrylamide, polyethylene glycol glycidyl ether, diaziridilated polyethylene oxide, gloyxal, furfural and the like.

The addition amount of the cross-linking agent is preferably from 0.1 to 70% by weight based on 100 parts by weight of the total weight of the first component (A) and the second component (B). When the addition amount is less than 0.1% by weight, the cross-linking effect is insufficient. When the addition amount exceeds 70% by weight, the film becomes too hard and brittle and is not preferable in terms of formability and adhesiveness.

If necessary to further improve the lubrication property of the film formed by using the hydrophilization agent according to the present invention, or to improve the coating performance of the agent, a surfactant may be added. The surfactant used for this purpose may be any one of the anionic, cationic, non-ionic or amphoteric surfactant. However, it is not preferable to use a surfactant having an ionic property opposite to that of the polymer of the components (A) and (B) used in combination with the surfactant, since the stability of the treating liquid may be impeded.

The following are examples of surfactant capable of adding into the hydrophilization agent according to the present invention: non-ionic surfactant such as polyoxy- ethylene alkylether, e.g, polyoxyethylene laurylether and polyoxyethylene stearyllether, polyoxyethylene alkylphenylether, e.g., polyoxyethylene nonylphenylether, sorbitan fatty ester, e.g., a block polymer of oxyethylene and oxypropylene (Pluronic), sorbitan monolaurate and sorbitan monostearate, fatty ester of polyoxyethylene, e.g., polyoxyethylene laurate, polyoxyethylene stearate, and polyoxyethylene oleate, glycerin fatty ester, and polyoxethylene propylene glycol alkyl phenol ether; anionic surfactant such as fatty salt, e.g., sodium laurate, sodium stearate and sodium oleate, alkyl sulfate, e.g., sodium dodecylsulfate, alkylsulfosuccinate, dialkylsulfosuccinate, alkenylsulfosuccinate and polyoxyethylene alkyl sulfate; cationic surfactant such as alkylamine salt, e.g., stearylamine acetate, quaternary ammonium salt, e.g., stearyltrimethyl ammonium, alkylbetaine, e.g., lauryl betaine, and amine oxide; and, amphoteric surfactant such as aminoproyonate and alkyl dimethyl betaine. The addition amount of the surfactant used is preferably from 0.1 to 70% by weight, more preferably from 0.3 to 50% by weight; furthermore preferably from 0.5 to 30% by weight based on 100 parts by weight of the total weight of the first component (A) and the second component (B).

In the hydrophilization agent according to the present invention, it is preferred that, relative to 100 parts by weight of the first component, i.e., the hydrophilic polymer having a non-ionic functional group (A), from 0.1 to 1000 parts by weight of the second component, i.e., the hydrophilic polymer having an ionic functional group (B), from 0.1 to 200 parts by weight of the third component, i.e., the vanadium compound (C) in terms of vanadium ions, and from 0.1 to 200 parts by weight of the fourth component, i.e., the compound (D) having at least one element selected from the group consisting of Zr, Ti, Si (D) in terms of the elements, are blended in the weight proportions. More preferably, relative to 100 parts by weight of the first component, i.e., the hydrophilic polymer having a non-ionic functional group (A), is from 1 to 100 parts by weight of the second component, i.e., the hydrophilic polymer having an ionic functional group (B) is from 1 to 100 parts by weight, the third component, i.e., the vanadium compound (C) is from 1 to 100 parts by weight in terms of vanadium ions, and the fourth component, i.e., the compound (D) having at least one element selected from the group consisting of Zr, Ti, Si (D) is from 1 to 100 parts by weight in terms of the elements.

The hydrophilization liquid according to the present invention preferably contains from 0.05 to 50g/L of the first component, i.e., the hydrophilic polymer having a non-ionic functional group (A) as a nonvolatile matter, from 0.05 to 50g/L of the second component, i.e., the hydrophilic polymer having an ionic functional group (B) as a nonvolatile matter, from 0.05 to 10 g/L of the third component, i.e., the vanadium compound (C) in terms of vanadium ions, and from 0.05 to 10 g/L of the fourth component, i.e, the compound (D) having at least one element selected from the group consisting of Zr, Ti, Si (D) in terms of the elements. More preferable ranges of the concentrations are: from 0.5 to 10g/L of the first component, i.e., the hydrophilic polymer having a non-ionic functional group (A) as a nonvolatile matter, from 0.5 to 10g/L of the second component, i.e., the hydrophilic polymer having an ionic functional group (B) as a nonvolatile matter, from 0.5 to 5 g/L of the third component, i.e., the vanadium compound (C) in terms of vanadium ions, and from 0.5 to 5 g/L of the fourth component, i.e, the compound (D) having at least one element selected from the group consisting of Zr, Ti, Si (D) in terms of the elements.

The solvent of the hydrophilization agent according to the present invention is mainly composed of water. The combination of water and a water-soluble solvent such as alcohol, ketone, cellosolve and the like in order to adjust the drying speed, to improve the conditions of the coated film, or to enhance the solubility of the components presents no problems. In addition, one or more of a rust preventive, a leveling agent, filler, a coloring agent, an anti-foaming agent and the like may be added into the hydrophilization agent according to the present invention in a range not impairing the gist of the present invention and the film performance.

The hydrophilization agent of the present invention is used as is, or is used as the surface-treatment liquid, in which the agent is diluted with water. The concentration and the viscosity of the treatment liquid are adjusted appropriately to meet the application method to be employed, the desired film thickness and the like. Preferably, the thickness of the film after drying is from 0.05 to 5 *µ* m, more preferably from 0.1 to 2 *µ* m. When the film thickness is less than 0.05 *µ* m, it is difficult to impart satisfactory hydrophilic property. When the film thickness exceeds 5 *µ* m, there is a possibility that the heat conductivity is inappropriately lowered.

The surface of metallic material to be surface-treated by the present invention is preferably pre-treated by chemical conversion and the like for the purpose of enhancing the corrosion resistance and the like. A chemical conversion treatment agent, which is based on ziroconium phosphate, titanium phosphate, vanadium and the like, can be listed as the pre-treatment agent which can enhance the corrosion resistance.

In the hydrophilization method according to the present invention, the surface of the metallic material is degreased, and if necessary, pre-surface treated; subsequently, the hydrophilization agent is deposited on the surface of the metallic material and is then heated and dried to form a film.

The application method of the aqueous treatment agent is not particularly limited, and such methods as dipping, spraying, brushing, roll-coating, flow-coating and the like can be used.

The drying method after application of the hydrophilic treatment agent is not particularly limited. Usually, a hot-blast drying oven and the like are used to dry at a temperature of from 80 to 300°C, more preferably from 100 to 250°C to form a film.

### [Examples]

The present invention is further explained with reference to the following examples ,which however do not limit the present invention.

### Examples 1 - 9 and Comparative Examples 1 - 5

In each of Examples 1 - 9 and Comparative Examples 1 - 5, the metallic material was subjected to the following pre-treatment. After the pre-treatment, the following hydrophilization agents were used to prepare the surface-treated metallic materials. The tests described below were carried out.

### (1) Pre-treatments

The pre-treatment by the methods shown in Fig. 1 (Table 1), Fig. 2 (Table 2) was applied to various metallic materials.

### Pre-treatment (A)

Al-Mn based alloy sheets (JIS-A3004, 70mm × 150mm, 0.12mm of sheet thickness) were dipped for 90 seconds in an aqueous solution, which was held at 60°C and contained 30g/L of a weakly alkaline detergent agent (registered trade name - Fine Cleaner 315, a product of Nihon Parkerizing Co., Ltd.) so as to remove contaminating matter on the surface, such as oil. The sheets were then washed with tap water. The surface-cleaned Al-Mn based alloy sheets were dipped for 60 seconds in the aqueous solution, which was held at 40 °C and contained 40g/L of a zirconium-phosphate treating liquid (registered trade name - N405 , a product of Nihon Parkerizing Co., Ltd.) , followed by washing with tap water. Drying was carried out at 80°C for 30 seconds. A ziroconium phosphate film(from 30 to 40 mg/m² in terms of the depositing amount of zirconium) was formed on the surface of the aluminum sheets.

### Pre-treatment (B)

Aluminum sheets (JIS-A1100, 70mm × 150mm, 0.12mm of sheet thickness) were dipped for 90 seconds in an aqueous solution, which was held at 60°C and contained 30g/L of a weakly alkaline detergent agent (registered trade name - Fine Cleaner 315, a product of Nihon Parkerizing Co., Ltd.) so as to remove contaminating matter on the surface, such as oil. The sheets were then washed with tap water. The surface-cleaned aluminum sheets were dipped for 60 seconds in the aqueous solution, which was held at 50°C and contained 40g/L of a zirconium-phosphate treating liquid (registered trade name - N405, a product of Nihon Parkerizing Co., Ltd.), followed by washing with tap water. Drying was carried out at 80°C for 30 seconds. A ziroconium phosphate film (from 25 to 35 mg/m² in terms of the depositing amount of zirconium) was formed on the surface of the aluminum sheets.

### Pre-treatment (C)

Aluminum sheets (JIS-A1100, 70mm × 150mm, 0.12mm of sheet thickness) were dipped for 90 seconds in an aqueous solution, which was held at 60°C and contained 30g/L of a weakly alkaline detergent agent (registered trade name - Fine Cleaner 315, a product of Nihon Parkerizing Co., Ltd.) so as to remove contaminating matter on the surface, such as oil. The sheets were then washed with tap water. Drying was carried out at 80°C for 30 seconds.

### (2) Hydrophilization Treatment

The hydrophilization treatment by the following methods was applied to the metallic material, which had been pre-conditioned as described above. The treatment methods used are shown in Fig. 1 (Table 1) and Fig. 2 (Table 2).

### Hydrophilization Method (A)

The hydrophilization liquid was adjusted to have 3% of total nonvolatile matter content. Immersion in the hydrophilization liquid was carried out at room temperature for 10 seconds. Setting was carried out for approximately 20 seconds, and the heating and drying were then carried out at 160°C for 5 minutes. Incidentally, the target amount of the hydrophilic film was from 0.3 to 0.5 g/m².

### Hydrophilization Method (B)

The hydrophilization liquid was adjusted to have 7% of total nonvolatile matter content. Bar-coating was carried out using a bar-coater No. 3 (the target value of wet application amount was 4.5mL/m²). The heating and drying were then carried out at 200°C for 10 seconds.

### (3) Components of Hydrophilization Agent

The treatment agents were adjusted using the following components and additives. The composition of the treatment liquid is shown in Fig. 1 (Table 1) and Fig. 2 (Table 2).
(A) Components of Hydrophilic Polymer having a Non-ionic Functional Group
   ① Polyvinyl alcohol (saponification degree - 90 mol %, molecular-weight - 100,000)
   ② 5 mol % - diketene-treated polyvinyl alcohol (saponification degree - 90 mol %, molecular-weight - 50,000)
   ③ acrylamide polymer (molecular weight - 70,000)
   ④ acrylamide/acrylic acid = 50/50 (molecular weight = 50,000)
(B) Components of Hydrophilic Polymer having an Ionic Functional Group
   Polymer having an Anionic Hydrophilic Functional Group (B-1)
   ① Copolymer of acrylic acid/sulfoethyl methacrylate (80/20) (Molecular weight - 70,000)
   ② Copolymer of acrylic acid/sodium vinylsulfonate (60/40) (Molecular weight - 30,000)
   ③ Sodium polystyrene sulfonate (molecular weight - 50,000)
      Polymer having a Cationic Hydrophilic Functional Group (B-2)
   ④ Polydimethyl diallyl ammonium chloride (molecular weight - 20,000)
   ⑤ Block polymer of adipic acid, amino ethyl piperazine and ε - caprolactum (molecular weight - 10,000)
(C) Vanadium Compound
   ① Sodium vanadate
   ② Ammonium metavanadate
(D) Compound having at least one element selected from the group consisting of Zr, Ti, Si
   ① Titanium fluoroammonium
   ② Fluoro zirconate
   ③ Ammonium zirconium carbonate
(E) Additive
   Anti bacteria Agent
   ① Zinc-2-pyridinethiol-1-oxide
   ② 2-n-octyl-4-isothiazoline-3-on
   ③ 2,2-dibromo-3-nitrylopropylamide
      (Organic cross-linking agent)
   ④ Glyoxal
   ⑤ Polyethylene glycol-polyisocyanate propolymer, block polymerized by sodium sulfite (isocyanate content: 5.0 -5.5)
      (Surfactant)
   ⑥ Discol R-612, product of Daiichi Industry Pharmacy Co., Ltd. (non-ionic surfactant)

### (4) Test and Evaluation

The following tests and evaluation were carried out for the treatment sheets, which were prepared in each of Examples 1 - 9 and Comparative Examples 1 - 5. The test results are shown in Fig. 3 (Table 3) and Fig. 4 (Table 4).

### (Hydrophilic Property)

The treated materials for the test were immersed in flowing water at room temperature for 8 hours, followed by drying at 80°C for 16 hours, as one cycle of the treatment. Five cycles of treatment were carried out. The contact angle of water on the surface of the resultant test samples was measured by using an image-processing type contact-angle meter CA-X (Product of Kyowa Interface Chemistry Co., Ltd.)

### (Prevention of Foreign Odor Generation)

The treated materials for the test were immersed in flowing water at room temperature for 72 hours, followed by drying at 80°C for 1 hour and exposure to the water vapor of boiled de-ionized water for 1 second. The foreign odor was quickly smelled and evaluated.

### Evaluation Criterion

○: No appreciable foreign odor
Δ: Somewhat appreciable foreign odor
×: Evidently appreciable foreign odor

### (Corrosion Resistance)

The salt-spray test based on JIS-Z-2371 was carried out. After spraying for 240 hours, the state of white rust generation on the samples was evaluated.

### Evaluation Criterion

ⓞ : No generation of white rust
○: Less than 10% of generated area of white-rust
Δ: From 10 to less than 30% of generated area of white rust
×: 30% or more of generated area of white rust

### (Anti-bacteria Property)

The treated materials for the test were immersed in flowing water at room temperature for 72 hours, followed by drying at 80 °C for 1 hour. The so-treated materials were cut into 3mm squares. Nutrient Broth and a 1 : 1 mixture liquid of heptone and glucose were used as the nutrient source of bacteria and mildew, respectively. The nutrient source was deposited on the surface of the test pieces, and a mixed suspension liquid of the following bacteria was sprayed on the deposited nutrient source. Culture was carried out at 30 ± 2°C for 14 days. The bacteria was extracted from the post-cultured treated sheets into the bacteria-controlled water. The number of bacteria in the bacteria-controlled water was measured by using a dilution culture method.

### Evaluation Criterion

○: Less than 10²/m² of the bacteria number
Δ: Not less than 10²/m² and less than 10⁵/m² of the bacteria number
×: Not less than 10⁵/m² of the bacteria number

### Bacteria Used

- Bacteria:: Escherishia coli, Bacillus subtilis
Pseudomanos aeruginosa
- Mildew:: Aspergillus niger, Penicillium critrinum
Cladosporium cladosporioides

As is apparent from the results of Fig. 3 (Table 3) and Fig. 4 (Table 4), the treated materials obtained in Examples 1 - 9, in which the inventive hydrophilization agent and treatment method were used, exhibit improved hydrophilic property even under the durability test conditions and improved property for prevention of foreign odor. The corrosion resistance test also revealed improved resistance. Contrary to these results, the durability of the film was poor, and the preventive property of foreign odor and the corrosion resistance failed in Comparative Examples 1, 4, in which no hydrophilic polymer component having a non-ionic functional group (A) was used. The hydrophilic property of the resultant film was unsatisfactory in Comparative Example 2, in which no polymer component having an ionic functional group (B) was used. The corrosion resistance of the resultant film was poor in Comparative Example 3, in which no vanadium-compound component was used, and in Comparative Example 5, in which no compound containing at least one element selected from the group consisting of Zr, Ti, Si (D) was used.

The hydrophilization agent and the treatment method of the present invention, when applied to the metallic material, particularly the aluminum-containing metallic material, can form on the surface of said metallic material a non-chrome film, which exhibits improved corrosion resistance, hydrophilic property and preventive property of foreign odor for a prolonged period of time, without using a chromic acid film for pre- conditioning.

### [Brief Explanation of Drawings]

[Figure 1] a graphic table (Table 1) showing the compositions of the hydrophilization agent of Examples.

[Figure 2] a graphic table (Table 2) showing the compositions of the hydrophilization agent of Comparative Examples.

[Figure 3] a graphic table (Table 3) showing the test results of Examples.

[Figure 4] a graphic table (Table 4) showing the test results of Examples.

**[Table 1]**

| [Fig.1] Composition of Hydrophilization Agent of Examples | | | | | | | | | |
|---|---|---|---|---|---|---|---|---|---|
| Examples | Pre-adjusting Method | Hydrophilization | | | | | | | |
| | | Treatment Method | Composition of Treatment Liquid (weight parts) | | | | | | |
| | | | (A) | (B) | (C) | (D) | (E) | | |
| | | | | | | | Anti-mildew Agent | Cross-linking Agent | Active Agent |
| 1 | A | A | ① (50) | ① (25) | ① (4) | ① (8) | ① (3) | ④ (10) | |
| 2 | B | A | ① (25) | ② (40) | ① (25) | ③ (10) | ③ (3) | ⑤ (5) | ⑥ (2) |
| 3 | C | A | ② (40) | ① (20) | ② (15) | ② (15) | ② (5) | ⑤ (5) | |
| 4 | B | B | ② (40) | ③ (30) | ① (12) | ② (8) | | ④ (6) | |
| 5 | B | A | ③ (35) | ④ (35) | ② (10) | ② (10) | ② (3) | ④ (5) | ⑥ (2) |
| 6 | A | A | ③ (50) | ⑤ (20) | ② (10) | ① (5) | ① (5) | ④ (10) | |
| 7 | C | A | ④ (20) | ① (25) | ② (25) | ① (18) | ③ (4) | ④ (8) | |
| 8 | B | A | ④ (30) | ③ (35) | ① (15) | ② (8) | ① (3) | | |
| 9 | A | A | ① (20) | ② (20) | ② (10) | ④ (5) | ③ (3) | | ⑥ (2) |

**[Table 2]**

| [Fig.2] Composition of Hydrophilization Agent of Comparative Examples | | | | | | | | | |
|---|---|---|---|---|---|---|---|---|---|
| Comparative Examples | Pre-adjusting Method | Hydrophilization | | | | | | | |
| | | Treatment Method | Composition of Treatment Liquid (weight parts). | | | | | | |
| | | | (A) | (B) | (C) | (D) | (E) | | |
| 1 | A | A | - | ① (25) | ① (4) | ① (8) | ① (3) | ④ (10) | |
| 2 | B | A | ① ((25) | ② (- | ① (25) | ③ (10) | ③ (3) | ⑤ (5) | ⑥ (2) |
| 3 | B | A | ③ (35) | ④ (35) | ② - | ② (10) | ② (3) | ④ (5) | ⑥ (2) |
| 4 | A | A | ③ - | ⑤ (20) | ② (10) | ① (5) | ① (5) | ④ (10) | |
| 5 | B | A | ④ (30) | ③ (35) | ① (15) | ② - | ① (3) | ④ (9) | |

**[Table 3]**

| [Fig.3] Test Result of Examples | | | | | |
|---|---|---|---|---|---|
| Examples | Test Result | | | | |
| | Hydrophilic Property | | Generation of Foreign Odor | Corrosion Resistance | Resistant to Bacteria |
| | Initial | After Cycles | | | |
| 1 | <5 | 20-24 | ○ | ⓞ | ○ |
| 2 | <5 | 12-18 | ○ | ⓞ | ○ |
| 3 | <5 | 19-25 | ○ | ○ | ○ |
| 4 | <5 | 16-21 | ○ | ⓞ | × |
| 5 | <5 | 14-18 | ○ | ⓞ | ○ |
| 6 | <5 | 22-25 | ○ | ⓞ | ○ |
| 7 | <5 | 20-25 | ○ | ○ | ○ |
| 8 | <5 | 23-26 | ○ | ⓞ | ○ |
| 9 | <5 | 18-20 | ○ | ○ | ○ |

## Claims

1. A hydrophilization agent for imparting hydrophilic properties to metallic material, **characterized in that** it contains:
(A) a hydrophilic polymer having at least one non-ionic functional group selected from a primary amide group, a secondary amide group, a tertiary amide group, a hydroxyl group and a polyoxyalkylene group;
(B) a hydrophilic polymer having at least one ionic functional group selected from a sulfonic acid group, a phosphonic acid group, a carboxyl group, a primary amino group, a secondary amino group, a tertiary amino group and a quaternary ammonium group;
(C) a vanadium compound; and
(D) a compound having at least one element selected from the group consisting of Zr, Ti, Si.

2. A hydrophilization agent as claimed in claim 1, in which said component (A) is:
*either* one or more polyvinyl alcohol polymer(s) conforming to the following general formula (I) 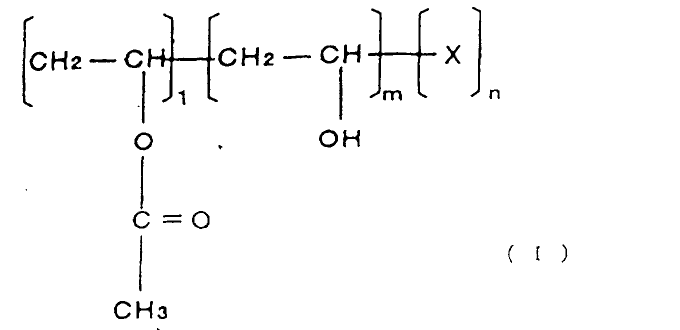 (and in which general formula:
X indicates a copolymerizing unit other than vinyl acetate and vinyl alcohol,
I, m and n indicate the copolymerizing number of the moles of a vinyl acetate copolymerizing unit, a vinyl-alcohol polymerizing unit and the copolymerizing unit X, respectively, and
I and n may be zero)
or one or more reaction product(s) between the polyvinyl alcohol polymer(s) aforesaid and a diketene.

3. A hydrophilization agent as claimed in claim 1, in which said component (A) is
one or more acrylamide polymer(s) selected from water-soluble polymer(s) and water-soluble copolymer(s) of an acrylamide compound conforming to the following general formula (II) 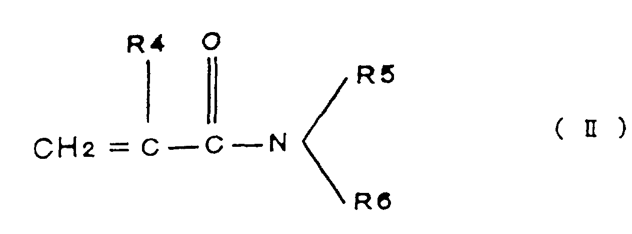 in which:
R₄ indicates a hydrogen atom or a CH3 group, and
R5 and R6 indicate, each independently of the other, a hydrogen atom, a C1-C4 alkyl group, a benzil group, or a C1-C3 hydroxyalkyl group.

4. A hydrophilization agent as claimed in any of the preceding claims, which further contains:
(E) at least one additive selected from the group consisting of an anti-bacteria/mildew agent, an organic crosslinking agent and a surfactant.

5. A hydrophilization agent as claimed in any of the preceding claims, which contains components (A)-(D) blended together in the following relative proportions:
(A) 100 parts by weight of said hydrophilic polymer having a non-ionic functional group;
(B) from 0.1 to 1000 parts by weight of said hydrophilic polymer having an ionic functional group;
(C) from 0.1 to 200 parts by weight of said vanadium compound calculated in terms of vanadium ions; and
(D) from 0.1 to 200 parts by weight of the compound having at least one element selected from the group consisting of Zr, Ti and Si calculated in terms of the elements.

6. A hydrophilization liquid for imparting hydrophilic properties to metallic material as claimed in claim 1, **characterized in that** it contains:
(A) from 0.05 to 50 g/L of the hydrophilic copolymer having a non-ionic functional group as non-volatile matter;
(B) from 0.05 to 50 g/L of the hydrophilic polymer having an ionic functional group as non-volatile matter:
(C) from 0.05 to 10 g/L of the vanadium compound calculated in terms of vanadium ions; and
(D) from 0.05 to 10 g/L of the compound having at least one element selected from the group consisting of Zr, Ti and Si calculated in terms of the elements.

7. A method for hydrophilization of metallic material, **characterized in that** a hydrophilization agent or hydrophilization liquid as claimed in any of claims 1 to 6 is deposited on the surface of the metallic material and is dried thereon to form a hydrophilic film.

8. A metallic material, **characterized in that** it bears a hydrophilic film formed on the surface thereof by depositing the hydrophilization agent or hydrophilization liquid for metallic material claimed in any of claims 1 to 6 on the surface thereof and drying the same.

9. A heat exchanger, **characterized in that** it bears a hydrophilic film formed on the surface of metallic material thereof by depositing thereon the hydrophilization agent or hydrophilization liquid as claimed in any of claims 1 to 6 and drying the same.
